# EUROPEAN PATENT SPECIFICATION

(11) **EP 2 269 736 B1**
(45) Date of publication and mention of the grant of the patent: **24.04.2013**
(21) Application number: 10184014.8
(22) Date of filing: 28.08.2002
(51) Int. Cl.: B01F 5/06, B01F 13/00, B01L 3/00, B01F 15/02

(54) **Retaining microfluidic microcavity and other microfluidic structures**
Mikrokammern und mikrofluidische Strukturen zur Handhabung kleiner Flüssigkeitsmengen
Microcavite microfluidique de retention microfluidique et autres structures microfluidiques

(30) Priority: 28.08.2001 US 315471 P; 21.10.2001 SE 0103522; 05.12.2001 SE 0104077; 06.12.2001 US 4424; 19.03.2002 WO PCT/SE02/00531; 19.03.2002 WO PCT/SE02/00538; 19.03.2002 WO PCT/SE02/00539; 19.03.2002 WO PCT/SE02/00537; 30.04.2002 SE 0201310; 30.04.2002 US 376776 P
(43) Date of publication of application: 05.01.2011
(62) Divisional of application: 02763153.0
(73) Proprietor: GYROS PATENT AB, 751 83 Uppsala (SE)
(72) Inventor: Andersson, Per, 753 29, UPPSALA (SE); Ekstrand, Gunnar, 754 53, UPPSALA (SE)
(74) Representative: Franks, Barry Gerard

(56) References cited:
- WO-A1-95/06508
- WO-A1-95/06870
- US-A- 6 030 581

## Description

### TECHNICAL FIELD

The present invention concerns a microfluidic device in which there is a microchannel structure which comprises (a) one or more inlet ports, (b) one or more outlet ports, and (c) a structural unit which comprises a fluidic function and is located between one of the inlet ports and one of the outlet ports. The structural unit (c) may include an inlet or an outlet port.

According to the invention the structural unit is selected by certain innovative structures permitting c) partition of larger aliquots of liquids into smaller aliquots of liquids and distributing the latter individually and in parallel to different microchannel structure of the same microfluidic device (unit C). There may in addition also be other structural units and/or microfluidic functionalities included.

The microchannel structures are intended for transport and processing of one or more aliquots of liquids (thus the device is named microfluidic). In preferred variants capillary force and centrifugal force are used for the transport of the aliquots.

The term "aliquot" will refer to an aliquot of a liquid if not otherwise specified.

The invention also concerns various methods in which the microfluidic device/microchannel structures is/are used.

### DRAWINGS

The structural units are viewed from above. The cross-sectional areas of the microconduits and microcavities are typically rectangular. The depths of the microchannel structures shown are typically constant and within the interval 100-150 µm. The widths for liquid transport microconduits are typically within the interval 100-300 µm and for air microconduits within the interval of 40-100 µm. Figures 2c specifically include certain dimensions in µm (italics). Circles represent openings to ambient atmospheres (inlet port, outlet ports, vents etc).

**Figure 1** illustrates the definitions of "edge" and "circumferential zone".

**Figures 3a****-c** illustrate innovative variants of unit C.

### BACKGROUND TECHNOLOGY

Microfluidic structures have been considered promising for assays, chemical synthesis etc which are to be performed with a high degree of parallelity. A generally expressed desire has been to run the complete sequence of steps of test protocols, including sample treatment within microfluidic devices. This has lead to a desire to dense-pack microchannel structures on planar substrates (chips) and to integrate valve functions, separation functions, means for moving liquids etc within microfluidic devices. In the macroscopic world these kinds of functionalities can easily be integrated into various kinds of liquid transportation systems, but in the microscopic world it has become expensive, unreliable etc to miniaturize the macroscopic designs. The situation becomes still worse when moving from µl- to nl-aliquots or from microchannel dimensions of above 100 µm down to those less than 100 µm. One of the main reasons for this is that the surface forces of liquids are more influential on liquid behavior when going down in volume from the µl-volumes to the nl volumes and smaller, for instance when going below 5 µl. A typically example is that wicking/imbibing will promote quick liquid transport from a nl-vessel making it difficult to retain a specified liquid volume in such a vessel. See below.

**Background publications: Centrifugal force for moving liquids in micofluidic devices** The use of centrifugal force for moving liquids within microfluidic systems has been described for instance by Abaxis Inc (WO 9533986, WO 9506870, US 5,472,603); Molecular devices (US 5,160,702); Camera Biosciences/Tecan (WO 9721090, WO 9807019, WO 9853311), WO 01877486, WO 0187487; Gyros AB/Amersham Pharmacia Biotech (WO 9955827, WO 9958245, WO 0025921, WO 0040750, WO 0056808, WO 0062042, WO 0102737, WO 0146465, WO 0147637, WO 0147638, WO 0154810, WO 0241997, WO 0241998, PCT/SE02/00531, PCT/SE02/00537, PCT/SE02/00538, PCT/SE02/00539).

See also presentations made by Gyros AB at various scientific meetings:
(1) High-through put screening SNP scoring in microfabricated device. Nigel Tooke (September 99);
(2) Microfluidics in a rotating CD (Ekstrand et al) MicroTAS 2000, Enschede, The Netherlands, May 14-18,2000.
(3) (a) SNP scoring in a disposable microfabricated CD device (Eckersten et al) and (b) SNP scoring in a disposable microfabricated CD device combined with solid phase Pyrosequencing™ (Tooke et al) Human Genome Meeting, HGM 2000, Vancouver, Canada, April 9-12,2000,
(4) Integrated sample preparation and MALDI MS on a microfluidic compact disc (CD with improved sensitivity (Magnus Gustavsson et al) ASMS 2001 (spring 2001).

Documentation on Gyros' presentations can be found on www.gyros.com.

### Background publications: Unit C (distribution manifold).

According to the inventors knowledge publications related to this topic are rare. US 6,117,396 (Orchid) gives a non-centrifugal gravity based microfluidic device in which a common reagent channel is used both as an overflow channel and as a reagent fill channel. A plurality of parallel volume metering capillaries is connected at different positions to the reagent fill channel from below. A centrifugally based distribution manifold for microfluidic systems has been given in WO 9958245 and WO 0187486. This latter variant is based on an annular distribution microconduit and comprises at least one waste/overflow microconduit per aliquot to be dispensed.

In patent document US6030581, there is shown an obliquely arranged conduit having an upper end provided with an inlet opening, a lower end provided with an outlet opening, and a number of open metering chambers arranged along its downward facing side, which chambers include electrically controlled valves opening into microchannel structures. When using the device a liquid is driven through the conduit so that the metering chambers are filled with liquid, after which the remaining, excess liquid in the conduit is discharged through the outlet opening so that the conduit is left empty while liquid remains in the metering chambers. Electric valves in the chambers are then operated, after which the liquid in the metering chambers flows into their respective microchannel structures.

Microfluidic devices with a microchannel structures that comprises a part that bents towards a lower level (downward bent) and/or a part that bents towards a higher level (upward bent) have been described previously. Downward and upward bents have been linked to each other in short series. Bent structures for centrifugal based system have been used for metering liquids, process chambers etc.

Downward bents have been combined with centrifugal force and used for retaining liquid (valve function) that is to be subjected to distinct process steps in the bent, e.g. chemical or biochemical reactions, affinity reactions, measurement operations, volume metering etc. By including an outlet microconduit with a valve function, for instance a passive valve, in the lower part of the bent, processed aliquots can been transported further downstream in the structure in a controlled manner.

Further details about previously known bent structure are given in: WO 9958245; WO 0147638; WO 0146465; WO 0040750; PCT/SE02/00531, PCT/SE02/00537, PCT/SE02/00538 and PCT/SE02/00539; WO 0241997 and WO 0241998. Bent structures have also been indicated in scientific presentations made by Gyros AB and given elsewhere in this specification.

### OBJECTS

**Major object**: The present invention provides novel fluidic functionalities that can be used when transporting and processing nl-volumes of liquids in microchannel systems of the kind defined under the heading "Technical Field". A particular intention is to create functionalities that do not require movable mechanical parts, e.g. to accomplish valving, pumping; mixing etc, and can be integrated into the microchannels and/or the substrates. The various novel functionalities are based on local surface characteristics of the inner walls of the microchannels and/or on properties of the liquids, such as surface tension and wetting ability.

### Other objects

- One object is to provide a structural unit with a functionality that permits simplified and reliable distribution in parallel to separate substructures of a plurality of microchannel structures in a microfluidic device.

Subobjects related to the above-mentioned objects correspond to methods and uses of the microfluidic devices/structural units for transporting and processing the aliquots of liquids. A particular subobject to the first object is a method for reducing evaporation caused by wicking from the type of nl-aliquot referred to.

### THE INVENTION

We have now found that these objectives can be at least partially met in a microfluidic device of the type defined under the heading "Technical Field".

The invention is among others based on the recognition that the appropriate surface tension of a liquid is important for controlling a liquid flow in a microsystem. This in particular applies when dealing with aliquots in the nano-litre range and/or if the control is exerted without mechanical valves and pumps, i.e. by driving the transport of aliquots through a functional unit of the invention by capillary force and/or inertia force etc. Typical examples of inertia force are gravitational force and centrifugal force. See also under the heading "Means for driving the liquid flow"

### SUMMARY OF THE FIRST MAIN ASPECT OF THE INVENTION

In the first main aspect, the invention relates to the microfluidic device generally defined under the heading "Technical Field". The main characteristic feature of this aspect of the invention is that the structural units is unit C described below. Units that combine the functionality and/or structure of two or more of the units C may be included. Other units that are known or will be known in the future may also be included as long as at least one of the innovative units A-E is present.

In preferred variants of this aspect at least one of the aliquots referred to in the description of a structural unit should have a surface tension, which is ≥ 5 mN/m, such as ≥ 10 mN/m or ≥ 20 mN/m.

### Summary of the second main aspect of the invention.

In the second main aspect, the invention is a method for transporting one, two or more aliquots through a microchannel structure of the microfluidic device, which is generally defined under the heading "Technical Field". The method comprises the steps of
(i) providing the microfluidic device,
(ii) providing said one, two or more aliquots,
(iii) introducing each of said aliquots through an inlet port of one, two or more microchannel structures of the device,
(iv) transporting the aliquots through at least one of the structural units which is present between an inlet port and an outlet port without utilizing valves and pumps containing movable mechanical parts, and
(v) possibly collecting the aliquots in treated form in one or more of the outlet ports of the microchannel structure.

One main characteristic feature of the second aspect is that one, two, three or more of the aliquots that are to be introduced through an inlet port of the microchannel structures have a surface tension which is ≥ 5 mN/m, such as ≥ 10 mN/m or ≥ 20 mN/m.

The microfluidic device provided in step (i) is according to the first main aspect.

In step (ii), at least one of the aliquots has a volume in the nano-litre range.

In step (iii) two or more of the aliquots may be introduced via the same or different inlet ports.

In step (iv) the driving force utilized for transport of the aliquots typically is capillary force and/or inertia force without excluding other kinds of forces as discussed elsewhere in this specification.

Steps (iii) and (iv) include that the various aliquots are processed according to an intended protocol, i.e. the transport step (step (iv)) includes that an aliquot introduced into a microchannel structure may be transported to a certain position (structural unit) and/or processed in a predetermined manner before the next aliquot is introduced. The part sequence that comprises steps (iii) and (iv) may thus be interrupted for dispensation steps, process steps etc to take place, be divided in substeps. For instance, The two reactants may be dispensed separately in sequence to the same or to different inlet ports and then mixed in a separate mixing unit as discussed elsewhere in this specification. Subsequent to the mixing the reaction mixture is transported to a reaction microcavity and retained therein while the reaction is allowed to proceed according to the desired protocol, after which the result of the reaction is analysed in the same microcavity or further downstream or outside the microchannel structure. The analysis may involve determination/detection of products and/or the disappearance of one or more of the reactants. By properly designing the system the proceeding of the reactions may be followed through the wall of the microcavity, i.e. there may also be substeps run in parallel (measuring and incubation).

In step (v) the term "treated form" contemplates that the aliquots have passed the structure and been subjected to one or more predetermined treatments. The chemical composition may have changed and/or aliquots may have been mixed.

At least one of the aliquots is typically aqueous and/or may contain one or more surface-active agents that increase or decrease the surface tension of a liquid, such as water. Typical agents that reduce surface tension are detergents that may be cationic, anionic, amphoteric or non-ionisable. Surface-active agents include organic solvents, preferably miscible with water. Examples are methanol, ethanol, isopropanol, formamide, acetonitrile etc. Charged or chargeable polymers, biomolecules such as proteins, certain sugars etc may also act as surface-active agents.

### MICROFLUIDIC DEVICES.

The micro fluidic device of the present invention typically comprises one, two, three, four or more sets of microchannel structures in which aliquots are transported or processed for various purposes, for instance analytical or synthetic purposes. The prefix "micro" contemplates that an individual microchannel structure comprises one or more cavities and/or channels that have a depth and/or a width that is ≤ 10³ µm, such as ≤ 10² µm. The lower limit for the width/breadth is typically significantly larger than the size of the largest reagents and constituents of aliquots that are to pass through a microchannel. The volumes of microcavities and thus also of aliquots to be transported and processed are typically ≤ 1000 nl, such as ≤ 500 nl or ≤ 100 nl or ≤ 50 nl. The nl-range comprises, if not otherwise specified, volumes < 5000 nl, e.g. within the ranges specified in the preceding sentence. There may also be larger cavities, e.g. directly connected to inlet ports, with a volume within intervals, such as 1-10 µl, 1-100 µl, and 1-1000 µl (µl-range). These cavities are typically used for the introduction of samples that are to be concentrated within a microchannel structure, or of washing liquids and the like.

The term "microconduit" means a part of a microchannel structure.

A microconduit may be intended for transport of liquids (liquid flow microconduits) or for transport into or out of the microchannel structure (air microconduits). The dimensions of the two types may be different, for instance an air microconduit may have a smaller cross-sectional area and/or a higher aspect ratio (depth:width) compared to a liquid flow microconduit or vice versa. The liquid flow microconduit thus may have an aspect ratio ≤ 1 while an air microconduit may have an aspect ratio ≥ 1 or vice versa, or the aspect ratio may be equal for the microconduit irrespective of their use. A liquid flow channel typically has hydrophilic inner surfaces as discussed elsewhere in this specification while an air channel typically has hydrophobic inner surfaces. Liquid flow microconduits may also be used for venting air into or out of a microchannel structure.

The terms "inlet port" and "outlet port" contemplate port for air and ports for liquids.

A microchannel structure may comprise a number of functional units that are necessary to carry out a predetermined protocol within the structure. A microchannel structure thus may comprise one, two, three or more units selected amongst inlet ports, outlet ports, units for distributing samples, liquids and/or reagents to individual microchannel structures, microconduits for liquid transport, units for defining liquid volumes, valving units, units venting to ambient atmosphere, units for mixing liquids, units for performing chemical reactions or bioreactions, units for separating soluble constituents or particulate materials from a liquid phase, waste liquid units including waste cavities and overflow channels, detection units, units for collecting an aliquot processed in the structure and to be transferred to another device e.g. for analysis, branching units for merging or dividing a liquid flow, etc. In one and the same microchannel structure there may be several inlet ports and/or several outlet ports that are connected to a main flow path via microconduits at a different or at the same downstream position. These microconduits may also contain functional units of the type discussed above.

Typically a micro fluidic device comprises in total ≥ 50, such as ≥ 100 or ≥ 200, microchannel structures per microfluidic device. The microchannel structures of a set are essentially identical and may or may not extend in a common plane of a substrate. There may be channels providing liquid communication between individual microchannel structures of a set and/or to one or more other sets that may be present in the same device. The microchannels are typically covered, i.e. surrounded by walls or other means for directing the flow and to lower evaporation. Openings such as in inlet ports, outlet ports, vents etc are typically present where appropriate.

The cross-section of a microchannel may have rounded forms all around, i.e. be circular, ellipsoid etc. A microchannel may also have inner edges, i.e. have cross-sections that are triangular, squaric, rectangular, partly rounded, planar etc. Microcavities or microchambers may have the same or a different cross-sectional geometry compared to surrounding microconduits.

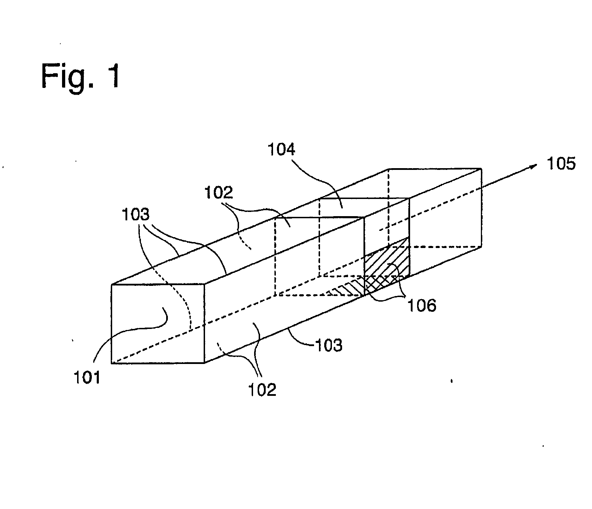

If not otherwise indicated the term "edge" of a microconduit will refer to the intersection of two inner walls of the microconduit. This kind of edges is typically extending more or less in parallel along the flow-direction (length-going edges). See figure 1 that shows a microchannel having a rectangular cross-section (101), four inner walls (102) with four wall intersections or edges (103). The arrow (105) gives the flow direction.

A circumferential zone of a microchannel is also illustrated in figure 1. It is an inner surface zone (104) in the inner wall of a microchannel and extends in a sleeve-like manner around the flow direction (105). The length of this kind of zone is at least from 0.1-10, 0.1-100, 0.1-1000 or more times the breadth or depth of the microchannel/microconduit at the upstream end of the zone.

The microfluidic device may have an axis of symmetry that is n-numbered (Cₙ) where n is an integer between 2 and ∞, preferably 6, 7, 8 and larger, for instance ∞. In preferred cases the microfluidic device as such may have a cylindrical, spherical or conical symmetry (C_{∞}) and/or is disc-shaped. Axes of symmetry may be combined with utilizing centrifugal force created by spinning around the axis of symmetry for driving a liquid flow through a microchannel structure.

The microfluidic device is typically in the form of a disc with the microchannel structures extending in a plane parallel to the disc plane.

The devices can be manufactured as summarized in PCT/SE02/00531.

The devices are preferably of the same dimension as a conventional CD, but may also be smaller, for instance down to 10% of conventional CDs, or larger, for instance up to more than 200% or more than 400 % of a conventional CD. These percentage values refer to the radius.

In the preferred variants the microchannel structures comprises inner surfaces that have been hydrophilised. If necessary the inner surfaces may be coated with a non-ionic hydrophilic polymer. The preferred variants are to a wettability allowing for capillarity to draw a liquid into a structural unit once having passed the inlet thereof. Where appropriate hydrophobic surface breaks are introduced.

The exact demand on liquid contact angles (hydrophilicity/hydrophobicity) of inner surfaces of the microchannel structure may vary between different functional units. Except for local hydrophobic surface breaks the liquid contact angel for at least two or three inner walls of a microconduit at a particular location should be wettable (hydrophilic) for the liquid to be transported, with preference for liquid contact angels that are ≤ 60°, such as ≤ 50° or ≤ 40° or ≤ 30° or ≤ 20°. In the case one or more walls have higher liquid contact angles, for instance non-wettable (hydrophobic), this can be compensated by a lowered liquid contact angle on the remaining walls. This may be particular important if non-wettable lids are used to cover open hydrophilic microchannel structures. The values above apply for the liquid to be transported and to the functional units given above (except for local hydrophobic surface breaks) and at the temperature of use. Surfaces having water contact angles within the limits given above may often be used for other aqueous liquids.

The terms "wettable surface" and "hydrophilic surface" are mostly contemplated a surface that has a liquid contact angle of ≤ 90° (in particular for water and other aqueous media). Surfaces that are "non-wettable" or "hydrophobic" thus typically have a liquid contact angle ≥ 90°. The liquid contact angle in the normal case refers to equilibrium contact angles although it sometimes may refer to receding and/or advancing contact angles depending on the purpose of a measurement. In the context of the invention equilibrium contact angles are primarily contemplated.

### Valve functions.

Three categories of valves that previously have been suggested for microfluidic devices are:
1. Mechanical valves.
2. Valves that comprise intersecting channels together with means that determine through which channel a liquid flow shall be created.
3. Inner valves, i.e. valves in which the passage or non-passage of a liquid depends on physical and/or chemical properties of the liquid and the material in the surface of the inner wall of a microconduit at the position of an inner valve.

Type 1 valves typically require physically closing of a microconduit are therefore called "closing valves". They often have movable mechanical parts for closing a microconduit.

Type 2 valves function without closing and are therefore "non-closing". A typical example is directing an electrokinetic flow at the intersection of two channels by switching the electrodes.

In type 3 valves, the non-passage or passage of a liquid may be based on:
(a) changing the cross-sectional area in a microconduit at the valve position by changing the energy input to the material of the wall in the microconduit (closing valves), and/or
(b) locally changing the interaction energy between a through-flowing aliquot and an inner surface of a microconduit at the valve position (non-closing valves), and/or
(c) a suitable curvature of the microconduit at the valve function (geometric valves, non-closing).

Type 3a valves comprises stimulus-responsive polymers (intelligent polymers) to create a valve function, or relaxation of non-equilibrium polymeric structures and meltable wax plugs to create a valve function.

In type 3b valves, the microconduit at the position of the valve is open even if the liquid is stopped (inner valves including capillary valves, also called passive valves). Through flow in this kind of valves is accomplished simply by increasing the force driving the liquid. One example comprises use of hydrophobic surface breaks (changes in chemical surface characteristics) as valves. One example comprises changes in geometric surface characteristics as valves. Type 3b valves comprise an anti-wicking function if they utilize changes in chemical and/or geometrical surface characteristics in edges as described for anti-wicking means.

Type 3c valves may be achieved by linking an upward bent of a microchannel immediately downstream to a downward bent in centrifugal based systems. One example comprises connecting an upward bent microconduit downstream to a U/Y-shaped microconduit, e.g.

### Anti-wicking means

Anti-wicking means are typically local surface modifications that counteract wicking/imbibing.

Imbibing (wicking) means that liquid transport is initiated in the edges of micro channels. Imbibing renders it difficult to retain a defined volume of a liquid in a desired microcavity for a longer period of time in case there is a microconduit having a length-going edge directly connected to the microcavity. This in particular applies if the volume ≤ 5 µl, such as in the nl-range or less. If the microconduit is connected to ambient atmosphere, for instance via an inlet port, imbibing will promote evaporation and irreversible loss of a predispensed volume of a liquid.

Anti-wicking means typically comprises a change in surface characteristics, such as in geometric and/or chemical surface characteristics, in an inner edge of a microconduit. The edge typically starts in a microcavity and stretches into the microconduit. Anti-wicking means may be present upstream or downstream a microcavity intended to contain a liquid. An anti-wicking functionality may inherently also be present in inner valves that are based on the presence of a hydrophobic surface break in an inner edge.

The change in geometric surface characteristics is typical local and may be selected from indentations, protrusions (projections), and an increase in the angle between the two inner walls defining a length-going inner edge. In most cases the deformation will also stretch into and/or across a wall delineated by this kind of edge, for instance into and/or across a wall delineated by two edges comprising the deformation. For indentations and protrusions this will mean valleys/grooves and ridges, respectively, across the wall. An increase in the angle between two intersecting walls means in its extreme that the inner edge can be rounded within a zone carrying the anti-wicking means but not rounded between this zone and the microcavity. The microconduit thus may locally be cylindrical. Also other physical deformations of the edges may result in anti-wicking.

Deformations in the form of indentations, for instance, may be "ear-like" as illustrated in the figures (214, 406, 509) of the present specification or similar to a triangular groove.

A change in chemical surface characteristics (surface break) in the context of anti-wicking primarily refers to a change in hydrophocity/hydrophilicity of the surface of an inner wall of a microchannel structure. Typically the inner surface of the microconduit is hydrophilic as discussed above with a change into hydrophobicity where anti-wicking is to be achieved.

In a similar manner as for changes in geometric surface characteristics a change in chemical surface characteristics typically may extend into and/or across the inner surface of a wall in a microconduit.

A change in geometric and chemical surface characteristics may fully or partially coincide in the inner surface of microconduit. An indentation and the like which stretches across an inner wall thus physically should comprise the change in chemical surface characteristics if the aim is to avoid valving effects. Compare figure 4 (406 and 407).

The anti-wicking means in a circumferential zone that comprise inner edges should be at different positions (or be lacking) in at least one compared to the position of the anti-wicking means in the other edges of the circumferential zone. For instance, if the microconduit has a four-edged cross-section (rectangular) with all four edges extending into a microcavity, opposite inner walls typically may have the change in surface characteristics at different distances, e.g. pair-wise, from the microcavity. Compare for instance figure 4.

The anti-wicking means described herein is adapted to prevent wicking for aliquots that have a surface tension, which is ≥ 5 mN/m, such as ≥ 10 mN/m or ≥ 20 mN/m. The importance of including anti-wicking means is primarily related to handling of aliquots ≥ 5 µl, such as aliquots in the nl-range, in the microfluidic devices described herein.

### Means for driving the liquid flow

The liquid flow may be driven in the microfluidic device of the present invention by distinct means that either is present on a substrate comprising the microchannel structures or is external to the substrate. The former variants typically means liquid flow created by electroendosmosis, by micropumps that are present on the substrate, expanding gas etc. The latter variants typically mean external pressure-generating means that create a liquid flow that is in fluid communication with the microchannel structure. Another alternative is to use forces such as capillary forces and inertia force including gravitational force and centrifugal force. In this latter case no means for moving the liquids is required in the microchannel structures or in the substrates carrying the microchannel structures.

Variants in which the microchannel structures are oriented from an inner position to an outer position in relation to a spinning axis, such as an axis of symmetry of a substrate as described above are typically combined with a spinner that is capable of spinning the substrate around the spinning axis that may coincide with the axis of symmetry. Useful spinners should be able to create the necessary centrifugal force for driving the liquids through at least a part of a microchannel structure. The centrifugal force may be utilized in combination with a second liquid aliquot to create a sufficient local hydrostatic pressure within a structure to drive a first aliquot through an outward (downward) and/or an inward (upward) bent of a microchannel structure. Typically spinning speeds are within the interval 50-25000 rpm, such as 50-15000 rpm. The spinning speed within a given protocol may vary and depends on the part structure that is to be passed by a liquid, for instance. In case the microfluidic device contains a plurality of microchannel structures that are to be run in parallel, it may be beneficial to start the passage of liquid through a particular structural unit with a short pulse of increased spinning followed by a slower spinning.

### Orientations and positions in a microfluidic device

The present invention is primarily intended for geometric arrangements in which the microchannel structure is present in a substrate and arranged about an axis of symmetry (spinning axis) that typically is going through substrate. The term "radial distance" means the shortest distance between an obj ect and the axis of symmetry and/or a spinning axis The radial distance for an inlet port and a structural unit may be the same, or the inlet port may be at a shorter or longer radial distance compared to the structural unit. In a typical case there is also an outlet port for liquid downstream the structural unit, which in most cases is at a larger radial distance than the inlet port. The microchannel structure may or may not be oriented in a plane perpendicular to the axis of symmetry. The terms "higher" and "upper" for a level/position means that an object is at a shorter radial distance (inner position) compared to being at a "lower" level/position (outer position). Similarly, the terms "up", "upward", "inwards", and "down", "downwards", "outwards" etc will mean towards and from, respectively, the spinning axis. This terminology applies if not otherwise is specified. With respect to other arrangements/substrates and conventional driving forces, i.e. gravity force, externally applied pressure, electro-osmotically (electrokinetically, by electroendoosmosis etc) driven flows etc, these terms have their conventional meaning.

The terms "downstream" and "upstream" are related to the process protocols and liquid flow as such. The terms thus refer to the order in which a unit, a part, a process step, etc is utilized. A downstream position is coming after an upstream position.

### DETAILED DESCRIPTION OF THE MAIN SUBASPECTS OF THE INVENTION (STRUCTURAL UNIT C

Inlet ports typically have hydrophobised areas to direct applied liquid into the ports. Local surface breaks that are hydrophobic for aqueous liquids are represented by straight or bent rectangles. They are primarily present for controlling liquid flow, e.g. in valves (inner valves), in anti-wicking means, in vents and for directing liquid inwards the structures in inlet ports.

### UNIT C (UNIT FOR FORMING A PLURALITY OF ALIQUOTS OF DEFINED VOLUMES WITHIN A MICROFLUIDIC DEVICE, DISTRIBUTION MANIFOLD).

The third subaspect of the invention is a microfluidic device comprising a microchannel structure in which there is a structural unit (unit C) accomplishing metering one, two, three or more aliquots (two or more = plurality of aliquots).

This subaspect is based on our recognition that the relative loss of liquid by evaporation may be significant when dispensing small aliquots, in particular nl-volumes, to individual microchannel structures in a microfluidic device. We have also found that the prior systems utilizing a common reagent fill channel from which metering is done in parallel in a plurality of metering microcavities are insufficient when the cross-sectional dimensions of the channels are in the lower part of the µm-range and/or the volumes are decreased into the nl-range.

Unit C presents a solution to these problems and makes it possible to reproducibly meter a number of smaller aliquots within the same microfluidic device and to transport these aliquots in parallel into separate microchannel structures of the microfluidic device or into separate parts of the same microchannel structure. The aliquots may be identical or different with respect to size, composition etc, and are typically in the nl-range as defined above

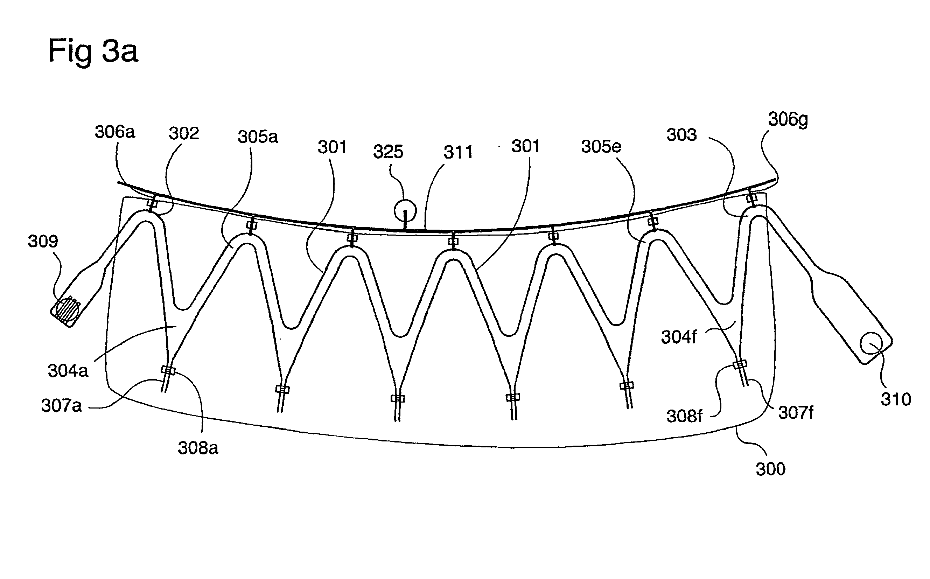

Unit C is represented in figures 3a-c that show variants that are arranged about a spinning axis that may coincide with an axis of symmetry as discussed above. In these figures the distribution unit as such is encircled (300).

Based on figures 3a-b, the unit comprises
(a) a continuous microconduit (301) containing an upper part at each end (end parts, 302, 303) and therebetween alternating lower and upper parts (304a-h/f and 305a-e, respectively);
(b) the number of upper parts including the end parts is n and the number of lower parts is n-1 where n is an integer > 2, i.e. ≥ 3;
(c) each of the upper parts (302, 303, 305a-e/g) has means for venting (top vent, inlet vents) (306a-g/i) to ambient atmosphere and/or anti-wicking means (326a-i) in length-going edges delineating its lower wall(s);
(d) each of the lower parts (304a-f/h) has an emptying opening which in a downstream direction via a connecting microconduit (307a-f/h) communicates with a substructure of a microchannel structure and/or with a corresponding substructure of another microchannel structure;
(e) each of the connecting microconduits (307a-f/h) has a valve (308a-f/h), i.e. a valve function in close association with the joint between the connecting microconduit and the corresponding lower part;
(f) an inlet port (309) is connected to the continuous microconduit (301) directly or indirectly at one of the upper parts (302, 303, 305a-e/g), preferably via one of the end parts (302 or 303);
(g) an outlet port (310) is connected to the continuous microconduit (301) directly or indirectly at another upper part (302, 303, 305a-e/g), preferably via one of the end parts (302 or 303) (which preferably is not connected to the inlet port, i.e. an inlet port and an outlet port should not connected at the same upper part).

In a lower part (304a-f/h), the continuous microconduit (301) is preferably shaped as a downward bent. This kind of bents includes that the microconduit in the bent is enlarged to a microcavity. Similarly an upper part is preferably in the form of an upwardly bent microconduit but without enlargement of the type that can be present in a downward bent.

The smallest cross-sectional areas of the continuous microconduit (301) between the ends (302, 303) should be in the upper parts, with preference for in association with the top vents (306a-g/i) and/or the anti-wicking means (326a-i). The cross-sectional area of the continuous microconduit (301) may be of constant size and/or shape along the length of the continuous microconduit.

The inlet ports (309) and the outlet ports (310) are typically at a lower level than the extremes of the upward bents and may even be at a lower level than the extremes of the lower parts (304) and/or than a desired part of the individual microchannel structures that are downstream the lower parts (304) (for instance at a lower level than a waste outlet port).

The liquid aliquot is preferably transported from an inlet port (309) to an outlet port (310) of the continuous microconduit (301) by capillarity meaning that the liquid contact angle in this part of the microchannel structure continuously has to be well below 90°, i.e. preferably ≤ 40°, such as ≤ 30° or ≤ 20°, and enabling filling by capillarity of the continuous microconduit (301) to valves (308a-f/h) by self-suction from an inlet port of the microconduit (301).

In the preferred variants the continuous microconduit (301) has meander-form.

The integer n is preferably > 2, such as 3, 4, 5, 7, 8, 9, 10, 11, 12 or more.

The joints between a connecting microconduit (307a-f/h) and a lower part (304a-f/h) are preferably located at the same level and/or at the lowest part of a downward bent. The valves (308a-f/h) in the connecting microconduit (307a-f/h) preferably are inner valves that may be closing or non-closing.

The top vents (306a-g/i) are preferably located at the same level on the upward bents (302, 303, 305a-e/g). Each top vent (306a-g/i) comprises an opening in an upper part (302, 303, 305a-e/g) of the continuous microconduit (301) and possibly also a microconduit. Each top vent may have an inner valve and/or may be equipped with anti-wicking means in the case the top vent has a length-going edge that might promote imbibing and evaporation of liquid. The anti-wicking means are described elsewhere in this specification. The top vents may be connected via a common venting channel (311) and an inlet (325) to ambient atmosphere.

The openings associated with top vents in the upper part may be directed upward as illustrated in figures 3a-c but may also be directed in other directions, e.g. as illustrated in figure 2c (236a-d).

As outlined for unit D preferred variants of unit C may have: A) inlet port (309) designed with a hydrophobic surface break at the rim of the inlet opening which directs a dispensed aliquot into the opening of the port, and B) an inner valve in the microconduit connecting an upper part to an inlet port (310).

One or both of the end parts (302,303) may directly or indirectly be connected to another distributing unit C according to the invention.

Unit C is intended for distributing (n-1) aliquots to (n-1) microchannel structures or (n-1) part structures of a microchannel structure. The volume between two close top vents (306a-e/g) will in most variants define the volume of the aliquot to be dispensed through the connecting microconduit (307a-f/h) between these top vents (segment). By varying the depth and/or width of different segments, one can envisage that the volumes dispensed through different connecting microconduits (307a-f/h) can differ in a controlled manner.

By first filling the continuous microconduit (301) with liquid between its end parts (302 and 303), for instance by self-suction, and then forcing liquid to pass through the connecting microconduits (307), the metered aliquots between close top vents will pass into separate connecting microconduits. Spillover between neighboring segments of the continuous microchannel (301) will be minimized due to the top vents and/or by the presence of anti-wicking means (326) in edges delineating lower walls in upper parts.

By filling the segments with the same liquid, for instance in one step, aliquots of the same composition will be dispensed through all the emptying openings.

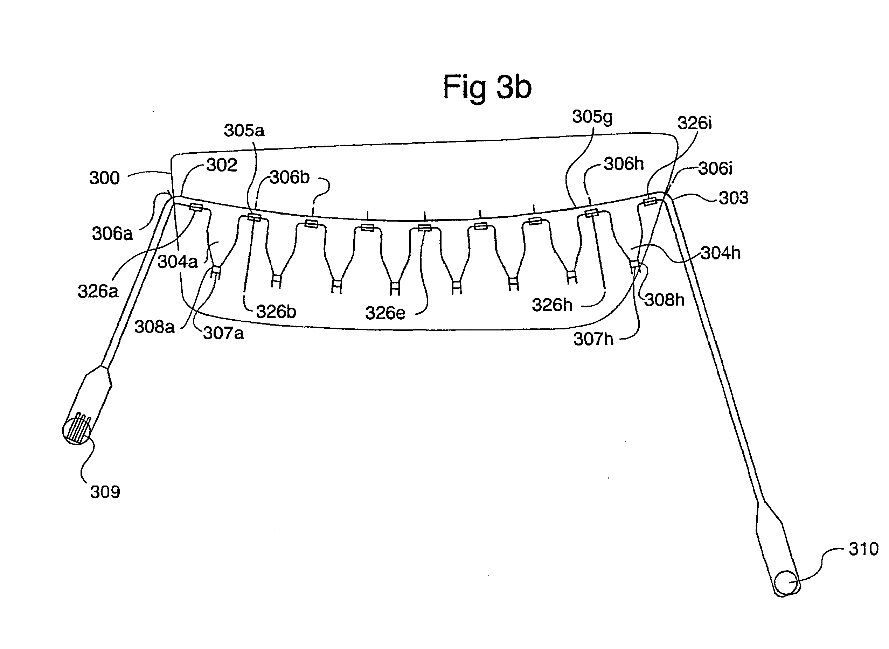

Figure 3b illustrates a non-meander form of unit C (straight form) in which the lower parts (304a-h) are in form of microcavities that are connected to each other via upper parts (305a-g). At the end of the continuous microconduit (301) there are also upper parts (302,303) via which an inlet and an outlet port may be connected (309 and 310, respectively). Means for venting (306a-i) the continuous microconduit (301) may be associated with upper parts of the continuous microconduit, for instance in the conduit parts (305a-g) and/or in the end parts (302,303). The lower part of each microcavity (304a-h) has an outlet opening to which a connecting microconduit (307a-h) with a valve function (308a-h) is associated. There may also be anti-wicking means (rectangles, 326a-i) at both sides of each microcavy (304a-h) in edges that extend down into a neighboring microcavity/lower part (304a-h). The anti-wicking means may be of the same kind as discussed elsewhere in this specification. A variant is a distribution manifold with a centrally located inlet port and anti-wicking means in the edges as discussed above but without the top vents (306a-g).

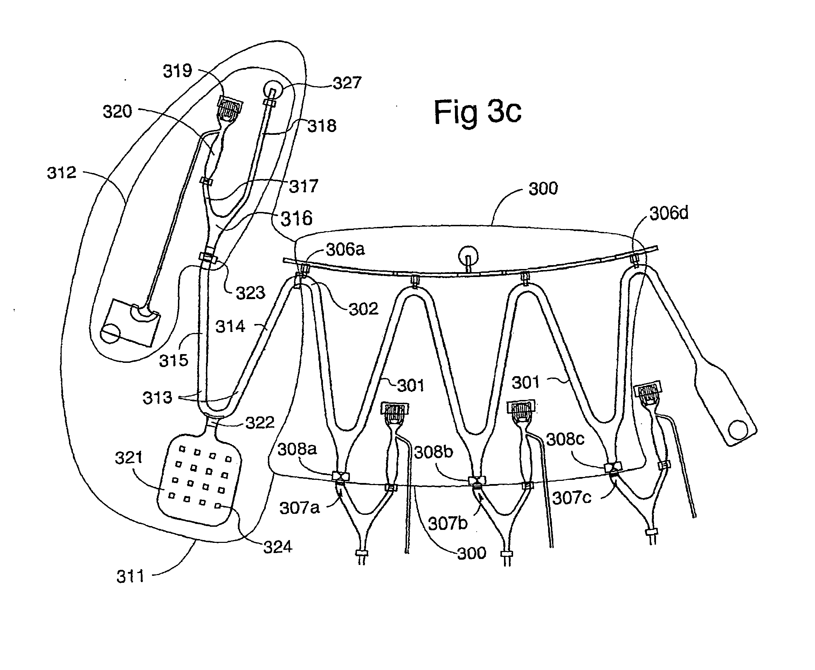

Figure 3c represents a variant, which will enable distribution of aliquots of different compositions to individual microchannel substructures. The distribution unit as such is encircled (300). Upstream the distribution unit (300) there is a microchannel substructure (311), which will enable filling of segments between close top vents (306a-d) of the continuous microchannel (301) with aliquots of different compositions. In order to accomplish this, substructure (311) comprises a volume-defining unit (312), which is capable of metering a liquid volume that is equal to the volume of the segment between two close top vents (306a-d) in the continuous microchannel (301). If the volumes of the segments are different, subunits defining different volumes may be included in substructure (311). In figure 3c, the substructure (311) upstream the distribution unit (300) may comprise further functionalities. Thus substructure (311) may comprise a first downward bent (313) which has one of its shanks (314) connected to the end part (302) of the continuous microchannel (301) and the other shank (315) connected to the lower part of a second downward bent (316) that in turn is connected to a metering part of volume-defining unit (312) at the upper part of one of its shanks (317). The other shank (318) of the second downward bent (316) may be venting to ambient atmosphere via an inlet (327). The illustrated metering part of volume-defining unit (312) is of the same kind as unit E and includes an overflow system and an inlet port (319) of the same kind as unit D. The volume of the metering microcavity (320) of the volume-defining unit (312) is the same as in a segment between two close top vents (306a-d). The substructure (311) of figure 3c also comprises (a) a large waste chamber (321) with a relatively wide opening (322) into the lowest part of the first downward bent (313), and (b) a valve function (323) associated with the connection between the first and second downward bent (313,316).

Due to the size of the waste chamber (321) there are supporting means in form of pillars (324) securing that its top and bottom are kept apart from each other.

The kind of design presented in figure 3c makes it possible to consecutively fill the segments between the top vents (306a-d) of the continuous microconduit (301) with aliquots of different compositions, and thus to distribute aliquots of different composition to the individual substructures connected to unit C via the connecting microconduits (308a-c). With reference to figure 3c this means (presuming waste chamber (321) is closed or absent):
Step 1: Aliquot 1 is metered in the volume-defining unit (312) and transported to downward bent (313), for instance by spinning if the unit is present on a spinnable substrate that may be a circular disc by the hydrostatic pressure created by centrifugal force.
Step 2: Aliquot 2 is metered in the volume-defining unit (312) and transported into the downward bent (313). This will push aliquot 1 to segment 1 (between top vents 406a and b) of the continuous microconduit (301).
Step 3: Aliquot 3 is metered in the volume-defining unit (312) and transported into the downward bent (313). This will push aliquot 1 to the second (next) segment and place aliquot 2 in the first segment.

When the desired number of segments has been filled a downwardly directed driving force is applied to pass the aliquots through their respective connecting microconduit/valve (307a-c/308a-c).

A simplified variant of figure 3c means that the first downward bent (313) is designed as a volume-defining unit, for instance by placing an overflow system at the same level as the top vents (306a-d) of the continuous microconduit (301) in shank (315).

By introducing a chemical functionality, for instance in the form of substructure comprising an inlet port followed by a reaction zone in front of unit C, unit C may be used for collecting separate fractions between each pair of neighboring top vents in the continuous microconduit (301) from liquids that have passed through the reaction zone. Collected fractions can then be further processed, for instance analysed, by taking them further down into the microchannel structure via the connecting microconduits (307a-c). With respect to figure 3c, such a zone suitably is positioned between the first and second downward bents (316 and 313, respectively), for instance combined with the valve (323)

The reaction zone may for instance comprise an immobilized reactant selected from (a) a catalysts such as an enzyme, (b) a ligand capable of binding to a component of a liquid which is to pass through the zone, (c) an affinity complex between a ligand and a binder etc. Based on the presence of particular components in the fractions that are collected one can analyse for features related to the zone as such or to the liquids applied, e.g. features of compounds present in the zone and/or in a fraction.

Unit C is preferably present in a spinnable microfluidic device of the kind discussed elsewhere in this specification. The continuous microconduit (301) may then be oriented in an annular-like fashion around a spinning axis and may occupy at least a sector of an annular zone defined by the continuous microconduit. The sector typically covers at least 0.5-10° and at most 360° relative a spinning axis and/or an axis of symmetry. The lower parts (304) of the unit are directed outwards from the spinning axis and the upper parts (302, 303, 305) inwards towards the spinning axis.

The driving force is selected according to the same principles as outlined for the microfluidic device above, with preference capillarity for filling the continuous microconduit (301) and centrifugal force or overcoming the valve functions (308a-f/h) in the connecting microconduits (307a-f/h).

The aliquot applied should have a surface tension, which is ≥ 5 mN/m, such as ≥ 10 mN/m or ≥ 20 mN/m.

The invention is further defined in the appending claims that are part of the specification.

## Claims

1. A microfluidic device having a microchannel structure in which there are one or more inlet ports (309), one or more outlet ports (310), and a structural unit in communication with at least one of said ports, wherein the structural unit is a distribution manifold which enables partition of a larger portion of liquid into smaller aliquots which subsequently are introduced in parallel into downstream parts of separate microchannel structures, and which said manifold comprises
(a) a continuous microconduit (301) containing an upper part (302, 303) at each end and therebetween alternating lower (304a-f) and upper parts (305a-e), the number of upper parts is n and the number of lower parts is n-1 where n is an integer ≥ 3; wherein the upper parts are positioned at a shorter radial distance from a spinning axis relative to the lower parts;
(b) an emptying opening in each of the lower parts which opening in a downstream direction via a connecting microconduit (307a-f) communicates with the remaining substructure of the microchannel structure or with the corresponding substructure of another microchannel structure;
(c) a valve (308a-f) in each of the connecting microconduits;
(d) an inlet port (309) which is connected to the continuous microconduit directly or indirectly at one of the upper parts; and
(e) an outlet port (310) which is connected to the continuous microconduit directly or indirectly at an upper part that is not connected to said inlet port,
wherein each of the upper parts (305a-e) has means for venting (306a-g) to ambient atmosphere and/or anti-wicking means (326a-i) in length-going edges delineating its lower wall(s).

2. The microfluidic device of claim 1, wherein the inlet port (309) is connected to the continuous microconduit (301) directly or indirectly at one of the end parts (302).

3. The microfluidic device of claim 1, wherein the outlet port is connected to the continuous microconduit (301) directly or indirectly at one of the end parts (303).

4. The microfluidic device of claim 1, wherein the outlet port (310) is connected to the continuous microconduit (301) by a microconduit comprising an inner valve.

5. The microfluidic device of claim 1, wherein each upper part (305a-e) comprises an upward bent.

6. The microfluidic device of claim 5, wherein the inlet port and the outlet port of the structural unit are at a lower level than the extremes of the upward bents.

7. The microfluidic device of claim 1, wherein each lower part (304a-f) comprises a downward bent.

8. The microfluidic device of claim 7, wherein the downward bent is enlarged to a microcavity.

9. The microfluidic device of claim 1, wherein the smallest cross-sectional area of the continuous microconduit (301) is in each of the upper parts.

10. The microfluidic device of claim 1, wherein the inlet port (309) and the outlet port (310) of the structural unit are at a lower level than the extremes of the lower parts.

11. The microfluidic device of claim 1, wherein the inlet port and the outlet port of the structural unit are at a lower level than any other parts of the microchannel structure that are downstream the lower part.

12. The microfluidic device of claim 1, wherein a connecting microconduit (307a-f) and a lower part are connected by joints which are located at the same level.

13. The microfluidic device of claim 1, wherein a connecting microconduit (307a-f) and a lower part are connected by joints, each of which are located at the lowest part of the lower part.

14. The microfluidic device of claim 1, wherein the valve (308a-f) in the connecting microconduit (307a-f) or in the microconduit connecting the outlet port to the continuous microconduit is an inner valve.

15. The microfluidic device of claim 1, wherein the valve (308a-f) is a capillary valve comprising a hydrophobic surface break.

## Patentansprüche

1. Mikrofluidik-Vorrichtung mit einer Mikrokanalstruktur, in der ein oder mehrere Einlassanschlüsse (309), ein oder mehrere Auslassanschlüsse (310) und eine Struktureinheit in Kommunikation mit mindestens einem der Anschlüsse vorhanden sind, wobei die Struktureinheit ein Distributionsverteiler ist, der Aufteilung eines größeren Flüssigkeitsanteils in kleinere Aliquoten ermöglicht, die anschließend in stromabwärts gelegene Teile getrennter Mikrokanalstrukturen parallel eingeleitet werden, und wobei der Verteiler aufweist:
(a) eine kontinuierliche Mikroleitung (301), die ein Oberteil (302, 303) an jedem Ende und dazwischen abwechselnde Unter- (304a-f) und Oberteile (305a-e) enthält, wobei die Anzahl von Oberteilen n und die Anzahl von Unterteilen n-1 ist, wobei n eine Ganzzahl ≥ 3 ist; wobei die Oberteile in einem kürzeren Radialabstand von einer Schleuderachse relativ zu den Unterteilen positioniert sind;
(b) eine Entleerungsöffnung in jedem der Unterteile, wobei die Öffnung in Stromabwärtsrichtung über eine Verbindungsmikroleitung (307a-f) mit der übrigen Teilstruktur der Mikrokanalstruktur oder mit der entsprechenden Teilstruktur einer weiteren Mikrokanalstruktur kommuniziert;
(c) ein Ventil (308a-f) in jeder der Verbindungsmikroleitungen;
(d) einen Einlassanschluss (309), der mit der kontinuierlichen Mikroleitung direkt oder indirekt an einem der Oberteile verbunden ist; und
(e) einen Auslassanschluss (310), der mit der kontinuierlichen Mikroleitung direkt oder indirekt an einem Oberteil verbunden ist, das nicht mit dem Einlassanschluss verbunden ist,
wobei jedes der Oberteile (305a-e) eine Lüftungseinrichtung (306a-g) zur Umgebungsatmosphäre und/oder eine Dochtwirkung verhindernde Einrichtung (326a-i) in längs verlaufenden Kanten hat, die seine untere(n) Wand (Wände) umreißen.

2. Mikrofluidik-Vorrichtung nach Anspruch 1, wobei der Einlassanschluss (309) mit der kontinuierlichen Mikroleitung (301) direkt oder indirekt an einem der Endteile (302) verbunden ist.

3. Mikrofluidik-Vorrichtung nach Anspruch 1, wobei der Auslassanschluss mit der kontinuierlichen Mikroleitung (301) direkt oder indirekt an einem der Endteile (303) verbunden ist.

4. Mikrofluidik-Vorrichtung nach Anspruch 1, wobei der Auslassanschluss (310) mit der kontinuierlichen Mikroleitung (301) durch eine Mikroleitung verbunden ist, die ein Innenventil aufweist.

5. Mikrofluidik-Vorrichtung nach Anspruch 1, wobei jedes Oberteil (305a-e) eine Aufwärtsbiegung aufweist.

6. Mikrofluidik-Vorrichtung nach Anspruch 5, wobei der Einlassanschluss und der Auslassanschluss der Struktureinheit auf einer niedrigeren Höhe als die äußersten Enden der Aufwärtsbiegungen liegen.

7. Mikrofluidik-Vorrichtung nach Anspruch 1, wobei jedes Unterteil (304a-f) eine Abwärtsbiegung aufweist.

8. Mikrofluidik-Vorrichtung nach Anspruch 7, wobei die Abwärtsbiegung zu einer Mikrokavität vergrößert ist.

9. Mikrofluidik-Vorrichtung nach Anspruch 1, wobei die kleinste Querschnittfläche der kontinuierlichen Mikroleitung (301) in jedem der Oberteile liegt.

10. Mikrofluidik-Vorrichtung nach Anspruch 1, wobei der Einlassanschluss (309) und der Auslassanschluss (310) der Struktureinheit auf einer niedrigeren Höhe als die äußersten Enden der Unterteile liegen.

11. Mikrofluidik-Vorrichtung nach Anspruch 1, wobei der Einlassanschluss und der Auslassanschluss der Struktureinheit auf einer niedrigeren Höhe als alle anderen Teile der Mikrokanalstruktur liegen, die stromabwärts vom Unterteil liegen.

12. Mikrofluidik-Vorrichtung nach Anspruch 1, wobei eine Verbindungsmikroleitung (307a-f) und ein Unterteil durch Verbindungsstellen verbunden sind, die auf gleicher Höhe liegen.

13. Mikrofluidik-Vorrichtung nach Anspruch 1, wobei eine Verbindungsmikroleitung (307a-f) und ein Unterteil durch Verbindungsstellen verbunden sind, von denen jede am untersten Teil des Unterteils liegt.

14. Mikrofluidik-Vorrichtung nach Anspruch 1, wobei das Ventil (308a-f) in der Verbindungsmikroleitung (307a-f) oder in der den Auslassanschluss mit der kontinuierlichen Mikroleitung verbindenden Mikroleitung ein Innenventil ist.

15. Mikrofluidik-Vorrichtung nach Anspruch 1, wobei das Ventil (308a-f) ein Kapillarventil ist, das einen hydrophoben Oberflächenaufbruch aufweist.

## Revendications

1. Dispositif microfluidique ayant une structure de microcanaux dans laquelle se trouvent un ou plusieurs orifices d'entrée (309), un ou plusieurs orifices de sortie (310), et une unité structurelle en communication avec au moins l'un desdits orifices, dans lequel l'unité structurelle est un collecteur de distribution qui permet la séparation d'une portion plus grande de liquide en des aliquotes plus petites qui sont ensuite introduites en parallèle dans des parties en aval de structures de microcanaux séparées, et dans lequel ledit collecteur comprend
(a) un microconduit continu (301) contenant une partie supérieure (302, 303) à chaque extrémité et entre ces dernières des parties inférieures (304a-f) et supérieures (305a-e) en alternance, le nombre de parties supérieures est n et le nombre de parties inférieures est n-1 où n est un nombre entier ≥ 3 ;
dans lequel les parties supérieures sont positionnées à une distance radiale plus courte depuis un axe de rotation par rapport aux parties inférieures ;
(b) une ouverture de vidange dans chacune des parties inférieures, laquelle ouverture, dans une direction aval via un microconduit de raccordement (307a-f), communique avec la sous-structure restante de la structure de microcanaux ou avec la sous-structure correspondante d'une autre structure de microcanaux ;
(c) une valve (308a-f) dans chacun des microconduits de raccordement ;
(d) un orifice d'entrée (309) qui est raccordé au microconduit continu directement ou indirectement au niveau d'une des parties supérieures ; et
(e) un orifice de sortie (310) qui est raccordé au microconduit continu directement ou indirectement au niveau d'une partie supérieure qui n'est pas raccordée audit orifice d'entrée,
dans lequel chacune des parties supérieures (305a-e) a des moyens d'aération (306a-g) vers l'atmosphère ambiante et/ou des moyens anti-capillarité (326a-i) dans des bords allant dans le sens de la longueur délimitant sa ou ses parois inférieures.

2. Dispositif microfluidique selon la revendication 1, dans lequel l'orifice d'entrée (309) est raccordé au microconduit continu (301) directement ou indirectement au niveau d'une des parties d'extrémité (302).

3. Dispositif microfluidique selon la revendication 1, dans lequel l'orifice de sortie est raccordé au microconduit continu (301) directement ou indirectement au niveau d'une des parties d'extrémité (303).

4. Dispositif microfluidique selon la revendication 1, dans lequel l'orifice de sortie (310) est raccordé au microconduit continu (301) par un microconduit comprenant une valve interne.

5. Dispositif microfluidique selon la revendication 1, dans lequel chaque partie supérieure (305a-e) comprend une courbure vers le haut.

6. Dispositif microfluidique selon la revendication 5, dans lequel l'orifice d'entrée et l'orifice de sortie de l'unité structurelle sont à un niveau plus bas que les extrêmes des courbures vers le haut.

7. Dispositif microfluidique selon la revendication 1, dans lequel chaque partie inférieure (304a-f) comprend une courbure vers le bas.

8. Dispositif microfluidique selon la revendication 7, dans lequel la courbure vers le bas s'élargit vers une microcavité.

9. Dispositif microfluidique selon la revendication 1, dans lequel l'aire en coupe transversale la plus petite du microconduit continu (301) est dans chacune des parties supérieures.

10. Dispositif microfluidique selon la revendication 1, dans lequel l'orifice d'entrée (309) et l'orifice de sortie (310) de l'unité structurelle sont à un niveau plus bas que les extrêmes des parties inférieures.

11. Dispositif microfluidique selon la revendication 1, dans lequel l'orifice d'entrée et l'orifice de sortie de l'unité structurelle sont à un niveau plus bas que toutes les autres parties de la structure de microcanaux qui sont en aval de la partie inférieure.

12. Dispositif microfluidique selon la revendication 1, dans lequel un microconduit de raccordement (307a-f) et une partie inférieure sont raccordés par des jonctions qui sont situées au même niveau.

13. Dispositif microfluidique selon la revendication 1, dans lequel un microconduit de raccordement (307a-f) et une partie inférieure sont raccordés par des jonctions, chacune desquelles est située au niveau de la partie la plus basse de la partie inférieure.

14. Dispositif microfluidique selon la revendication 1, dans lequel la valve (308a-f) dans le microconduit de raccordement (307a-f) ou dans le microconduit raccordant l'orifice de sortie au microconduit continu est une valve interne.

15. Dispositif microfluidique selon la revendication 1, dans lequel la valve (308a-f) est une valve capillaire comprenant une brèche de surface hydrophobe.
